# EUROPÄISCHE PATENTSCHRIFT

(11) **EP 0 805 962 B1**
(45) Veröffentlichungstag und Bekanntmachung des Hinweises auf die Patenterteilung: **29.10.2003**
(21) Anmeldenummer: 95943181.8
(22) Anmeldetag: 21.12.1995
(51) Int. Cl.: G01M 3/20

(54) **Testgas Lecksuche mit einer Leitwertregelung nach Vorvakuumdruck oder Zwischenanschlussdruck**
Test gas leakage detection with conductance control of primary vacuum pressure or intermediate connection pressure
Détection de fuites par gaz témoin avec un contrôle de conductance par vide primaire ou pression de la connection intermediaire

(30) Priorität: 09.02.1995 DE 19504278
(43) Veröffentlichungstag der Anmeldung: 12.11.1997
(73) Patentinhaber: LEYBOLD VACUUM GmbH, 50968 Köln (DE)
(72) Erfinder: BÖHM, Thomas, D-50859 Köln (DE); WIDT, Rudi, D-50969 Köln (DE)
(74) Vertreter: Leineweber, Jürgen, Dipl.-Phys.
(86) Internationale Anmeldenummer: EP9505079
(87) Internationale Veröffentlichungsnummer: WO96024828

(56) Entgegenhaltungen:
- EP-A- 0 033 945
- EP-A- 0 534 824
- EP-A- 0 534 825
- WO-A-93/12411
- DE-A- 3 124 205
- US-A- 4 893 497

## Beschreibung

Die Erfindung betrifft ein Verfahren zum Betrieb eines Testgas-Lecksuchgerätes mit einer zweistufigen Reibungsvakuumpumpe und einer Membranvakuumpumpe als Vorvakuumpumpe. Außerdem betrifft die Erfindung ein für die Durchführung des Betriebsverfahrens geeignetes Lecksuchgerät.

Ein Testgas-Lecksuchgerät der hier betroffenen Art ist aus der DE-A-31 24 205 bekannt. Weiterhin ist es inzwischen bekannt, mit einem Lecksuchgerät dieser Art ein zweistufiges Lecksuchverfahren durchzuführen, das aus einer Groblecksuche und einer sich daran anschließenden empfindlichen Lecksuche besteht. Solange der Druck im Einlassbereich des Lecksuchgerätes noch relativ hoch ist, bleibt das in der zum Zwischenanschluss führenden Leitung befindliche Ventil geschlossen. Das von der Vorvakuumpumpe angesaugte Gasgemisch gelangt auf die Vorvakuumseite der zweiten Reibungspumpenstufe. Ist in diesem Gas infolge eines relativ groben Lecks im Prüfling bereits Testgas (z.B. Helium) vorhanden, dann gelangt dieses im Gegenstrom durch beide Reibungspumpenstufen zum Detektor und wird registriert. Ist der Prüfling nicht grob undicht, kann bei ausreichend niedrigem Druck im Einlassbereich des Lecksuchers das Ventil in der zum Zwischenanschluss führenden Leitung geöffnet werden, so dass die Lecksuche mit einer höheren Empfindlichkeit durchgeführt werden kann.

Aus der WO-A1-93-12 411 und der EP-A1-534 824 ist es bekannt, in einem Lecksuchgerät eine Membranvakuumpumpe zu verwenden.

Reibungsvakuumpumpen können nur mit einem Vorvakuumdruck betrieben werden, dessen obere Grenze bei wenigen (z.B. 5) mbar liegt. Membranvakuumpumpen haben einen Enddruck, der ebenfalls in dieser Größenordnung liegt. Der Betrieb einer Reibungsvakuumpumpe mit einer Membranvakuumpumpe als Vorpumpe setzt deshalb voraus, dass die Membranvakuumpumpe in der Nähe ihres Enddruckes betrieben wird. Mit zunehmender Annäherung des Druckes an den Enddruck geht jedoch das Saugvermögen einer Membranvakuumpumpe gegen Null. Da die Ansprechzeit eines Lecksuchers der hier betroffenen Art maßgeblich vom Saugvermögen der Vorpumpe abhängt, wird diese beim Einsatz einer Membranvakuumpumpe als Vorpumpe sehr lang. Als Ansprechzeit wird die Zeit bezeichnet, die zwischen dem Eintritt von Testgas in den Einlass des Lecksuchgerätes und der Registrierung des Testgases im Detektor vergeht. Während der Groblecksuche durchströmt das Testgas im Gegenstrom beide Reibungspumpenstufen, sodass die Ansprechzeit relativ lang ist. Nach der Umschaltung des Lecksuchgerätes auf die empfindliche Lecksuche durchströmt das Testgas nur noch eine Reibungspumpenstufe im Gegenstrom, so dass sich die Ansprechzeit verkürzt.

Der Erfindung liegt die Aufgabe zugrunde, ein Lecksuchgerät der hier betroffenen Art so zu betreiben, dass die Lecksuche trotz des Einsatzes einer Membranvakuumpumpe mit kürzeren Ansprechzeiten durchgeführt werden kann.

Erfindungsgemäß wird diese Aufgabe durch die Maßnahmen und Merkmale der Patentansprüche gelöst.

Die Erfindung erlaubt es, den Einlass des Lecksuchgerätes sehr früh über die gedrosselte Verbindungsleitung mit dem Zwischenanschluss zu verbinden, auch wenn zu diesem Zeitpunkt der Druck im Bereich des Einlasses des Lecksuchgerätes noch größer ist als der maximal zulässige Druck zwischen den beiden Reibungspumpenstufen. Der wesentliche Vorteil dieser Maßnahme liegt darin, dass bereits sehr früh das gegenüber der Membranpumpe wesentlich höhere Saugvermögen der zweiten Reibungspumpenstufe zur Verfügung steht, was eine wesentliche Verkürzung der Ansprechzeit zur Folge hat.

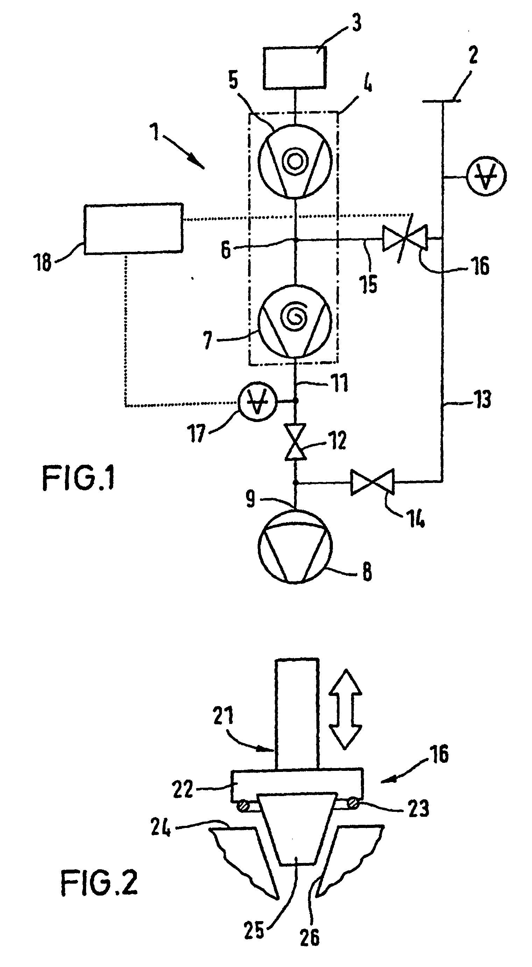

Weitere Vorteile und Einzelheiten der Erfindung sollen anhand der Figuren 1 und 2 erläutert werden. Es zeigen
- Figur 1 ein Ausführungsbeispiel für ein Testgas-Lecksuchgerät nach der Erfindung und
- Figur 2 ein Ausführungsbeispiel für ein bzgl. seines Leitwertes einstellbares Ventil.

Im Diagramm nach Figur 1 sind das Lecksuchgerät allgemein mit 1, sein Einlass mit 2, der als Massenspektrometer ausgebildete Testgasdetektor mit 3, die zweistufige Reibungsvakuumpumpe mit 4, die erste als Turbomolekularpumpe ausgebildete Reibungspumpenstufe mit 5, der Zwischenanschluss mit 6, die zweite als Gewindestufe scrollpumpe ausgebildete Reibungsvakuumpumpenstufe mit 7 und die als Vorpumpe verwendete Membranpumpe mit 8. Die Auslassseite der zweiten Reibungspumpenstufe 7 steht mit der Einlassseite 9 der Membranpumpe 8 in Verbindung, und zwar über die Leitung 11 mit dem Ventil 12. Der Einlass 2 des Lecksuchgerätes 1 steht über die Verbindungsleitung 13 mit dem Ventil 14 mit der Einlassseite 9 der Membranpumpe 8 in Verbindung. Außerdem kann die Verbindung zwischen dem Einlaß 2 des Lecksuchgerätes 1 und dem Zwischenanschluß über die Leitung 15 mit dem Ventil 16 hergestellt werden.

Zur Überwachung des Druckes im Bereich des der Eintrittsseite 9 der Membranpumpe 8 ist das Druckmeßgerät 17 vorgesehen. Es liefert seine Signale an einen Regler (Block 18). Dieser steht mit dem Ventil 16 in Verbindung.

Zur Durchführung einer Lecksuche wird beispielsweise ein Prüfling an den Einlaß 2 des Testgaslecksuchgerätes 1 angeschlossen. Bei geschlossenen Ventilen 12 und 16 wird er über die Leitung 13 vorevakuiert. Bei ausreichend niedrigem Druck (ca. 5 mbar) beginnt die Lecksuche mit dem öffnen des Ventils 12. Ist ein relativ grobes Leck im Prüfling vorhanden, gelangt Testgas auf die Vorvakuumseite der Reibungspumpe 4 und von dort aus im Gegenstrom zum Detektor 3. In diesem Fall wird die Lecksuche beendet.

Wird noch kein Testgas registriert, wird die Evakuierung des Prüflings über die Leitung 13 fortgesetzt. Beim Lecksuchgerät nach dem Stand der Technik muß so lange evakuiert werden, bis der Druck im Einlaßbereich dem Druck am Zwischenanschluß 6 entspricht. Erst dann kann das Ventil 16 zur Einleitung einer hochempfindlichen Lecksuchphase geöffnet werden. Da beim dargestellten Ausführungsbeispiel die Vorpumpe eine Membranpumpe ist, würde es wegen des abnehmenden Saugvermögens sehr lange dauern, bis mit der empfindlicheren Lecksuche begonnen werden kann. Auch die Ansprechzeit des Lecksuchers - Zeit zwischen dem Eintritt von Testgas in den Einlaß 2 und der Registrierung im Detektor 3 - ist bei geschlossenem Ventil 16 noch sehr lang.

Da der Leitwert des Ventils 16 einstellbar ist, besteht die Möglichkeit, die Verbindung des Einlasses 2 zum Zwischenanschluß 6 bereits zu einem Zeitpunkt zu öffnen, zu dem der Einlaßdruck noch höher ist als der notwendige Druck am Zwischenanschluß 6. Der Leitwert in der Verbindungsleitung muß derart geregelt werden, daß das Ventil 16 die jeweils erforderliche Druckdifferenz aufrechterhält. Mit abnehmendem Druck am Einlaß 2 nimmt der Leitwert des Ventils 16 zu. Es ist vollständig geöffnet, wenn der Einlaßdruck dem Druck am Zwischenanschluß 6 entspricht.

Zweckmäßig erfolgt die beschriebene Regelung automatisch in Abhängigkeit vom Druck am Zwischeneinlaß 6 oder auch - wie beim Ausführungsbeispiel realisiert - in Abhängigkeit vom Vorvakuumdruck, gemessen mit dem Druckmeßgerät 17. Dieses liefert seine Signale an den Regler 18, der den Leitwert des Ventils 16 entsprechend den gewünschten Druckverhältnissen regelt.

Figur 2 zeigt ein Ausführungsbeispiel für das regelbare Ventil 16. Der einstellbare Ventilstempel 21 umfaßt einen Ventilteller 22 mit einem 0-Ring 23. Liegt der 0-Ring 23 dem Sitz 24 auf, ist das Ventil 16 geschlossen. Der Ventilteller 22 ist mit einem Kegel 25 ausgerüstet, der je nach Stellung des Ventilstempels 21 mehr oder weniger in die korrespondierend zum Kegel 25 konisch gestaltete Ventilöffnung 26 eintaucht. Die Größe des freien Ringspaltes zwischen Kegel 25 und öffnung 26 ist dadurch variierbar.

Statt des beschriebenen regelbaren Ventils 16 ist auch der Einsatz von zwei oder noch mehr Ventilen mit Blenden oder anderen Leitwertbegrenzungen möglich. Damit wird abhängig vom Einlaßdruck sukzessive von einem zum anderen Ventil mit dem jeweils größeren Leitwert geschaltet.

## Patentansprüche

1. Verfahren zum Betrieb eines Lecksuchgerätes mit einem Einlass (2), mit einem als Massenspektrometer ausgebildeten Detektor (3), mit einer ersten Reibungspumpenstufe (5), mit einer zweiten Reibungspumpenstufe (7), mit einem Zwischenanschluss (6) zwischen der ersten und der zweiten Reibungspumpenstufe, mit einer als Membranvakuumpumpe ausgebildeten Vorvakuumpumpe (8), mit einer ersten, absperrbaren Verbindungsleitung (13) zwischen dem Einlass (2) des Lecksuchgerätes und der Einlassseite (9) der Vorvakuumpumpe (8), mit einer zweiten absperrbaren Verbindungsleitung (11) zwischen dem Auslass der zweiten Reibungspumpenstufe (7) und der Einlassseite (9) der Vorvakuumpumpe (8) sowie mit einer dritten, in Bezug auf ihren Leitwert regelbaren Leitung (15) zwischen dem Einlass (2) des Lecksuchgerätes und dem Zwischenanschluss (6) ; zur Durchführung des Lecksuchverfahrens wird ein am Einlass (2) angeschlossener Prüfling zunächst über die Leitung (13) bis auf etwa 5 mbar evakuiert; danach beginnt eine Groblecksuche durch Öffnen des Ventils (12); wird ein grobes Leck nicht registriert, wird die Evakuierung des Prüflings über die Leitung (13) fortgesetzt und für den Beginn der empfindlichen Lecksuche die mit einem regelbaren Ventil (16) ausgerüstete Verbindungsleitung (15) geöffnet; das Ventil (16) wird in Abhängigkeit vom Vorvakuumdruck oder vom Druck am Zwischeneinlass (6) derart geregelt, dass zwischen den beiden Reibungspumpenstufen (5, 7) ein Druck aufrechterhalten wird, der zum einen möglichst hoch ist und zum anderen die Aufrechterhaltung des Betriebsvakuums im Detektor (3) erlaubt.

2. Für die Durchführung des Betriebsverfahrens nach Anspruch 1 geeignetes Lecksuchgerät mit einem Einlass (2), mit einem als Massenspektrometer ausgebildeten Detektor (3), mit einer ersten Reibungspumpenstufe (5), mit einer zweiten Reibungspumpenstufe (7), mit einem Zwischenanschluss (6) zwischen der ersten und der zweiten Reibungspumpenstufe, mit einer als Membranvakuumpumpe ausgebildeten Vorvakuumpumpe (8), mit einer ersten, absperrbaren Verbindungsleitung (13) zwischen dem Einlass (2) des Lecksuchgerätes und der Einlassseite (9) der Vorvakuumpumpe (8), mit einer zweiten absperrbaren Verbindungsleitung (11) zwischen dem Auslass der zweiten Reibungspumpenstufe (7) und der Einlassseite (9) der Vorvakuumpumpe (8) sowie mit einer dritten Leitung (15) zwischen dem Einlass (2) des Lecksuchgerätes und dem Zwischenanschluss (6), wobei der Leitwert der dritten Leitung (15) in Abhängigkeit vom Vorvakuumdruck oder vom Druck am Zwischeneinlass (6) geregelt ist, und wobei zur Leitwertregelung ein Ventil (16) mit einem Ventilstempel (21) ausgerüstet ist und dieser einen Kegel (25) trägt, dem eine korrespondierende konisch gestaltete Ventilöffnung (26) zugeordnet ist, oder wobei zur Leitwertregelung mehrere Ventile vorgesehen sind.

## Claims

1. Method for operating a leakage detector with an inlet (2), a detector (3) in the form of a mass spectrometer, a first friction pump stage (5), a second friction pump stage (7), an intermediate connection (6) between the first and second friction pump stages, a fore-vacuum pump (8) in the form of a diaphragm vacuum pump, a first connection line (13), which can be shut off, between the inlet (2) of the leakage detector and the inlet side (9) of the fore-vacuum pump (8), a second connection line (11), which can be shut off, between the outlet of the second friction pump stage (7) and the inlet side (9) of the fore-vacuum pump (8) and also a third line (15), controllable in respect of its conductance, between the inlet (2) of the leakage detector and the intermediate connection (6); to carry out the leakage detecting method a test specimen connected to the inlet (2) is first evacuated via the line (13) up to approximately 5 mbar; after this a rough leakage detection begins by opening the valve (12); if no rough leakage is recorded, evacuation of the test specimen via the line (13) is continued and the connection line (15) fitted with a controllable valve (16) is opened for the start of the sensitive leakage detection; the valve (16) is controlled as a function or the fore-vacuum pressure or the pressure at the intermediate outlet (6) in such a way that between the two friction pump stages (5, 7) a pressure is maintained, which on the one hand is as high as possible and on the other hand allows the operating vacuum in the detector (3) to be maintained.

2. A suitable leakage detector for carrying out the operating method according to claim 1, with an inlet (2), a detector (3) in the form of a mass spectrometer, a first friction pump stage (5), a second friction pump stage (7), an intermediate connection (6) between the first and second friction pump stages, a fore-vacuum pump (8) in the form of a diaphragm vacuum pump, a first connection line (13), which can be shut off, between the inlet (2) of the leakage detector and the inlet side (9) of the fore-vacuum pump (8), a second connection line (11), which can be shut off, between the outlet of the second friction pump stage (7) and the inlet side (9) of the fore-vacuum pump (8) and also a third line (15) between the inlet (2) of the leakage detector and the intermediate connection (6), wherein the conductance of the third line (15) is controlled as a function of the fore-vacuum pressure or the pressure at the intermediate inlet (6) and wherein for controlling the conductance a valve (16) is fitted with a valve plunger (21), which carries a cone (25), to which a corresponding conically designed valve orifice (26) is assigned, or wherein several valves are provided for controlling the conductance.

## Revendications

1. Procédé de fonctionnement d'un dispositif de recherche des fuites, comportant une entrée (2), un détecteur (3) configuré en tant que spectromètre de masse, un premier étage de pompe à vide à friction (5), un deuxième étage de pompe à vide à friction (7), un raccord intermédiaire (6) entre le premier et le deuxième étage de pompe à vide à friction, une pompe à vide préalable (8) configurée en tant que pompe à vide à membrane, une première conduite de raccordement (13) pouvant être fermée entre l'entrée (2) du dispositif de recherche des fuites et le côté d'entrée (9) de la pompe à vide préalable (8), une deuxième conduite de raccordement (11) pouvant être fermée entre la sortie du deuxième étage de pompe à vide à friction (7) et le côté d'entrée (9) de la pompe à vide préalable (8), ainsi qu'une troisième conduite (15) réglable quant à sa conductance entre l'entrée (2) du dispositif de recherche des fuites et le raccord intermédiaire (6) ; pour mettre en application le procédé de recherche des fuites, un échantillon d'essai raccordé à l'entrée (2) est tout d'abord évacué par la conduite (13) jusqu'à environ 5 mbar ; une recherche grossière des fuites commence alors par l'ouverture de la soupape (12) ; si aucune fuite grossière n'est enregistrée, l'évacuation de l'échantillon d'essai par la conduite (13) se poursuit et la conduite de raccordement (15) équipée d'une soupape (16) réglable est ouverte pour débuter la recherche sensible des fuites ; la soupape (16) est réglée en fonction de la pression de vide préalable ou de la pression régnant au niveau de l'entrée intermédiaire (6), de telle sorte qu'une pression est maintenue entre les deux étages de pompe à vide à friction (5, 7), ladite pression étant d'une part la plus élevée possible et permettant d'autre part le maintien du vide de service dans le détecteur (3).

2. Dispositif de recherche des fuites convenant pour la mise oeuvre du procédé de fonctionnement selon la revendication 1, comportant une entrée (2), un détecteur (3) configuré en tant que spectromètre de masse, un premier étage de pompe à vide à friction (5), un deuxième étage de pompe à vide à friction (7), un raccord intermédiaire (6) entre le premier et le deuxième étage de pompe à vide à friction, une pompe à vide préalable (8) configurée en tant que pompe à vide à membrane, une première conduite de raccordement (13) pouvant être fermée entre l'entrée (2) du dispositif de recherche des fuites et le côté entrée (9) de la pompe à vide préalable (8), une deuxième conduite de raccordement (11) pouvant être fermée entre la sortie du deuxième niveau de la pompe à vide à friction (7) et le côté entrée (9) de la pompe à vide préalable (8), ainsi qu'une troisième conduite (15) entre l'entrée (2) du dispositif de recherche des fuites et le raccord intermédiaire (6), la conductance de la troisième conduite (15) étant réglée en fonction de la pression de vide préalable ou de la pression régnant au niveau de l'entrée intermédiaire (6), et une soupape (16) étant équipée d'un piston de soupape (21) pour le réglage de la conductance, ledit piston de soupape portant une cône (25) auquel est associée une ouverture de soupape (26) d'une forme conique correspondante, ou bien plusieurs soupapes étant prévues pour le réglage de la conductance.
